(19) Europäisches Patentamt
European Patent Office
Office européen des brevets

(11) **EP 4 535 702 A1**

(12) **EUROPEAN PATENT APPLICATION**
published in accordance with Art. 153(4) EPC

(43) Date of publication:
**09.04.2025 Bulletin 2025/15**

(21) Application number: **23815279.7**

(22) Date of filing: **01.06.2023**

(51) International Patent Classification (IPC):
*H04L 5/00* (2006.01)

(52) Cooperative Patent Classification (CPC):
**H04L 5/00; H04W 4/06; H04W 72/232**

(86) International application number:
**PCT/CN2023/097718**

(87) International publication number:
**WO 2023/232102 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2022 CN 202210622061**

(71) Applicant: **Beijing Unisoc Communications
Technology
Co., Ltd
Beijing 100083 (CN)**

(72) Inventor: **WANG, Hualei
Beijing 100083 (CN)**

(74) Representative: **Mewburn Ellis LLP
Aurora Building
Counterslip
Bristol BS1 6BX (GB)**

(54) **COMMUNICATION METHOD AND APPARATUS, AND STORAGE MEDIUM**

(57)   The disclosure provides a communication method, a communication apparatus, and a storage medium. A network device transmits indication information. A terminal device receives the indication information, and maps a first number of virtual resource blocks corresponding to multicast broadcast service (MBS) data to a second number of physical resource blocks according to a mapping scheme indicated by the indication information. By adopting the method in the disclosure, a transmission resource for the MBS data can be determined, the resource utilization can be improved, and the reliable transmission of the MBS data can be realized.

```
┌──────────────────┐                    ┌──────────────────┐
│    TERMINAL      │                    │    NETWORK       │
│     DEVICE       │                    │     DEVICE       │
└──────────────────┘                    └──────────────────┘
         │                                       │
         │   S301. INDICATION INFORMATION         │
         │   (INDICATING A MAPPING SCHEME FROM    │
         │◄──VIRTUAL RESOURCE BLOCKS──────────────│
         │   CORRESPONDING TO BROADCAST MBS DATA  │
         │   TO PHYSICAL RESOURCE BLOCKS)         │
         │                                       │
┌──────────────────────────────────────┐         │
│ S302. MAP A FIRST NUMBER OF VIRTUAL  │         │
│ RESOURCE BLOCKS CORRESPONDING TO THE │         │
│ MBS DATA TO A SECOND NUMBER OF       │         │
│ PHYSICAL RESOURCE BLOCKS ACCORDING   │         │
│ TO THE MAPPING SCHEME INDICATED BY   │         │
│ THE INDICATION INFORMATION           │         │
└──────────────────────────────────────┘         │
         │                                       │
```

**FIG. 3**

EP 4 535 702 A1

## Description

CROSS-REFERENCE TO RELATED APPLICATION(S)

This application claims priority to Chinese Patent Application No. 202210622061.6, filed on June 2, 2022 with State Intellectual Property Office of China, entitled "COMMUNICATION METHOD, COMMUNICATION APPARATUS, AND STORAGE MEDIUM", the entire disclosure of which is hereby incorporated by reference.

TECHNICAL FIELD

The disclosure relates to the field of communication technology, and in particular, to a communication method, a communication apparatus, and a storage medium.

BACKGROUND

The 3rd generation partnership project (3GPP) release 17 (R17) explicitly supports multicast broadcast services (MBS), and supports broadcast MBS and multicast MBS. For a physical downlink shared channel (PDSCH) of broadcast MBS, the PDSCH can be scheduled with a downlink control information (DCI) format 4_0. For a PDSCH of broadcast MBS, the mapping from virtual resource blocks (VRB) to physical resource blocks (PRB) supports both interleaved mapping and non-interleaved mapping. However, there is currently no specific mapping scheme.

SUMMARY

The disclosure provides a communication method, a communication apparatus, and a storage medium to improve the resource utilization.

In a first aspect, a communication method is provided. The method includes the following. Indication information is received, where the indication information indicates a mapping scheme from virtual resource blocks corresponding to multicast broadcast service (MBS) data broadcasted to physical resource blocks. A first number of virtual resource blocks corresponding to the MBS data are mapped to a second number of physical resource blocks according to the mapping scheme indicated by the indication information.

In a possible implementation, the MBS data is a physical downlink shared channel (PDSCH) scheduled with a downlink control information (DCI) format 4_0.

In another possible implementation, the mapping scheme indicated by the indication information is non-interleaved mapping, and mapping the first number of virtual resource blocks corresponding to the MBS data to the second number of physical resource blocks includes any one of: mapping a virtual resource block n to a physical resource block n, or mapping the virtual resource block n to a physical resource block $n + N_{\text{start}}^{\text{CORESET}}$, where $N_{\text{start}}^{\text{CORESET}}$ is a lowest-numbered physical resource block in a control resource set where a corresponding DCI is received.

In another possible implementation, the mapping scheme indicated by the indication information is interleaved mapping.

In another possible implementation, a set of $N_{\text{MBS,init}}^{\text{size}}$ virtual resource blocks $\{0, 1, \ldots, N_{\text{MBS,init}}^{\text{size}} - 1\}$ are divided into $N_{\text{bundle}}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a cell, and $N_{\text{MBS,init}}^{\text{size}}$ is a size of an initial downlink bandwidth part if the CORESET 0 is not configured for a cell.

In another possible implementation, a set of $N_{\text{MBS,init}}^{\text{size}}$ physical resource blocks $\{N_{\text{start}}^{\text{CORESET}}, N_{\text{start}}^{\text{CORESET}} + 1, \ldots, N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where

$$N_{\text{bundle}} = \left\lceil \left( N_{\text{MBS,init}}^{\text{size}} + \left( N_{\text{MBS},i}^{\text{start}} + N_{\text{start}}^{\text{CORESET}} \right) \bmod L \right) / L \right\rceil$$

, L = 2 is a bundle size, and $N_{\text{start}}^{\text{CORESET}}$ is a lowest-numbered physical resource block in a control resource set where a corresponding DCI is received.

In another possible implementation, a virtual resource-block bundle 0 and/or a physical resource-block bundle 0

$$L - \left( \left( N_{\text{MBS},i}^{\text{start}} + N_{\text{start}}^{\text{CORESET}} \right) \bmod L \right)$$

includes virtual resource blocks and/or physical resource blocks, a virtual resource-block bundle $N_{\text{bundle}}$ - 1 and/or a physical resource-block bundle $N_{\text{bundle}}$ - 1 includes

$$\left( N_{\text{BWP,init}}^{\text{size}} + N_{\text{BWP},i}^{\text{start}} + N_{\text{start}}^{\text{CORESET}} \right) \bmod L$$

virtual resource blocks and/or physical resource blocks if

$$\left( N_{\text{MBS,init}}^{\text{size}} + N_{\text{MBS},i}^{\text{start}} + N_{\text{start}}^{\text{CORESET}} \right) \bmod L > 0$$

, otherwise, the virtual resource-block bundle $N_{\text{bundle}}$ - 1 and/or the physical resource-block bundle $N_{\text{bundle}}$ - 1 includes L virtual resource blocks and/or physical resource blocks, and all other virtual resource-block bundles and/or physical resource-block bundles include L virtual resource blocks and/or physical resource blocks.

In another possible implementation, $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \left\lceil \left( N_{\text{MBS},i}^{\text{size}} + \left( N_{\text{MBS},i}^{\text{start}} \bmod L_i \right) \right) / L_i \right\rceil$ resource-block bundles in increasing order of a resource-block number and a resource-block bundle number, where $L_i = 2$.

In another possible implementation, a resource-block bundle 0 includes $L_i$ - $\left( N_{MBS,i}^{start} \bmod L_i \right)$ resource blocks, a resource-block bundle $N_{\text{bundle}}$ - 1 includes $\left( N_{MBS,i}^{start} + N_{MBS,i}^{size} \right) \bmod L_i$ resource blocks if $\left( N_{MBS,i}^{start} + N_{MBS,i}^{size} \right) \bmod L_i > 0$, otherwise, the resource-block bundle $N_{\text{bundle}}$ - 1 includes $L_i$ resource blocks, and all other resource-block bundles include $L_i$ resource blocks.

In another possible implementation, mapping the first number of virtual resource blocks corresponding to the MBS data to the second number of physical resource blocks according to the mapping scheme indicated by the indication information includes: mapping the virtual resource blocks to the physical resource blocks according to at least one of: a virtual resource-block bundle $N_{\text{bundle}}$ - 1 being mapped to a physical resource-block bundle $N_{\text{bundle}}$ - 1, or a virtual resource-block bundle $j \in \{0,1,..., N_{\text{bundle}} - 2\}$ being mapped to a physical resource-block bundle f(j), where f(j) = rC + c, j = cR + r, r = 0,1, ...,R - 1, c = 0,1, ..., C - 1, R = 2, and $C = \lfloor N_{bundle}/R \rfloor$.

In another possible implementation, an interval between virtual resource blocks is $j \in \{0,1, ..., N_{\text{bundle}} - 1\}$.

In another possible implementation, R indicates that two resource-block bundles are taken as a unit, C indicates a number of units corresponding to $N_{\text{bundle}}$ resource-block bundles when two resource-block bundles are taken as a unit, c indicates one of C units, and r indicates one resource-block bundle in one unit.

In another possible implementation, the method further includes the following. The first number of virtual resource blocks corresponding to the MBS data are mapped to the second number of physical resource blocks according to a non-interleaved mapping scheme if the indication information is not received.

In a second aspect, a communication method is provided. The method includes the following. Indication information is transmitted, where the indication information indicates a mapping scheme from virtual resource blocks corresponding to multicast broadcast service (MBS) data broadcasted to physical resource blocks.

In a possible implementation, the MBS data is a physical downlink shared channel (PDSCH) scheduled with a downlink control information (DCI) format 4_0.

In another possible implementation, the mapping scheme indicated by the indication information is non-interleaved mapping, a virtual resource block n is mapped to a physical resource blocks n, or the virtual resource block n is mapped to a physical resource block n + $N_{\text{start}}^{\text{CORESET}}$, where $N_{\text{start}}^{\text{CORESET}}$ is a lowest-numbered physical resource block in a control resource set where a corresponding DCI is received.

In another possible implementation, the mapping scheme indicated by the indication information is interleaved mapping.

In another possible implementation, a set of $N_{\text{MBS,init}}^{\text{size}}$ virtual resource blocks $\{0,1, ..., N_{\text{MBS,init}}^{\text{size}} - 1\}$ are divided into $N_{\text{bundle}}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a

cell, and $N_{\text{MBS,init}}^{\text{size}}$ is a size of an initial downlink bandwidth part if the CORESET 0 is not configured for a cell.

In another possible implementation, a set of $N_{\text{MBS,init}}^{\text{size}}$ physical resource blocks $\{N_{\text{start}}^{\text{CORESET}}, N_{\text{start}}^{\text{CORESET}} + 1, ..., N_{\text{start}}^{\text{CORESET}} + N_{\text{MBS,init}}^{\text{size}} - 1\}$ are divided into N physical resource-block bundles in increasing order of a physical resource-block number and a physical bundle number, where

$$N_{\text{bundle}} = \left\lceil \left( N_{\text{MBS,init}}^{\text{size}} + \left( N_{\text{MBS},i}^{\text{start}} + N_{\text{start}}^{\text{CORESET}} \right) \bmod L \right) / L \right\rceil$$, L = 2 is a bundle size, and $N_{\text{start}}^{\text{CORESET}}$ is a lowest-numbered physical resource block in a control resource set where a corresponding DCI is transmitted.

In another possible implementation, a virtual resource-block bundle 0 and/or a physical resource-block bundle 0 includes $L - \left( \left( N_{\text{MBS},i}^{\text{start}} + N_{\text{start}}^{\text{CORESET}} \right) \bmod L \right)$ virtual resource blocks and/or physical resource blocks, a virtual resource-block bundle $N_{\text{bundle}}$ - 1 and/or a physical resource-block bundle $N_{\text{bundle}}$ - 1 includes $\left( N_{\text{BWP,init}}^{\text{size}} + N_{\text{BWP},i}^{\text{start}} + N_{\text{start}}^{\text{CORESET}} \right) \bmod L$ virtual resource blocks and/or physical resource blocks if $\left( N_{\text{MBS,init}}^{\text{size}} + N_{\text{MBS},i}^{\text{start}} + N_{\text{start}}^{\text{CORESET}} \right) \bmod L > 0$, otherwise, the virtual resource-block bundle $N_{\text{bundle}}$ - 1 and/or the physical resource-block bundle $N_{\text{bundle}}$ - 1 includes L virtual resource blocks and/or physical resource blocks, and all other virtual resource-block bundles and/or physical resource-block bundles include L virtual resource blocks and/or physical resource blocks.

In another possible implementation, $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \left\lceil \left( N_{\text{MBS},i}^{\text{size}} + \left( N_{\text{MBS},i}^{\text{start}} \bmod L_i \right) \right) / L_i \right\rceil$ resource-block bundles in increasing order of a resource-block number and a resource-block bundle number, where $L_i = 2$.

In another possible implementation, a resource-block bundle 0 includes $L_i - \left( N_{MBS,i}^{start} \bmod L_i \right)$ resource blocks, a resource-block bundle $N_{\text{bundle}}$ - 1 includes $\left( N_{MBS,i}^{start} + N_{MBS,i}^{size} \right) \bmod L_i$ resource blocks if $\left( N_{MBS,i}^{start} + N_{MBS,i}^{size} \right) \bmod L_i > 0$, otherwise, the resource-block bundle $N_{\text{bundle}}$ - 1 includes $L_i$ resource blocks, and all other resource-block bundles include $L_i$ resource blocks.

In another possible implementation, the virtual resource blocks are mapped to the physical resource blocks according to at least one of: a virtual resource-block bundle $N_{\text{bundle}}$ - 1 being mapped to a physical resource-block bundle $N_{\text{bundle}}$ - 1, or a virtual resource-block bundle $j \in \{0,1,..., N_{\text{bundle}} - 2\}$ being mapped to a physical resource-block bundle f(j), where f(j) = rC + c, j = cR + r, r = 0,1, ...,R - 1, c = 0,1, ..., C - 1, R = 2, $C = \lfloor N_{bundle}/R \rfloor$.

In another possible implementation, an interval between virtual resource blocks is $j \in \{0,1, ..., N_{\text{bundle}} - 1\}$.

In another possible implementation, R indicates that two resource-block bundles are taken as a unit, C indicates a number of units corresponding to $N_{\text{bundle}}$ resource-block bundles when two resource-block bundles are taken as a unit, c indicates one of C units, and r indicates one resource-block bundle in one unit.

In a third aspect, a communication apparatus is provided. The communication apparatus is configured to perform the communication method in the first aspect. For example, the communication apparatus can be a chip or a terminal device. The method can be implemented by software, hardware, or by hardware executing corresponding software.

In a possible implementation, the communication apparatus includes a transceiving unit and a processing unit. The transceiving unit is configured to receive indication information, where the indication information indicates a mapping scheme from virtual resource blocks corresponding to multicast broadcast service (MBS) data broadcasted to physical resource blocks. The processing unit is configured to map a first number of virtual resource blocks corresponding to the MBS data to a second number of physical resource blocks according to the mapping scheme indicated by the indication information.

Optionally, the MBS data is a physical downlink shared channel (PDSCH) scheduled with a downlink control information (DCI) format 4_0.

Optionally, the mapping scheme indicated by the indication information is non-interleaved mapping, and the processing unit is configured to perform any one of: mapping a virtual resource block n to a physical resource block n, or mapping the virtual resource block n to a physical resource block $n + N_{\text{start}}^{\text{CORESET}}$, where $N_{\text{start}}^{\text{CORESET}}$ is a lowest-numbered physical resource block in a control resource set where a corresponding DCI is received.

Optionally, the mapping scheme indicated by the indication information is interleaved mapping.

Optionally, a set of $N_{\text{MBS,init}}^{\text{size}}$ virtual resource blocks $\{0, 1, \ldots, N_{\text{MBS,init}}^{\text{size}} - 1\}$ are divided into $N_{\text{bundle}}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a cell, and $N_{\text{MBS,init}}^{\text{size}}$ is a size of an initial downlink bandwidth part if the CORESET 0 is not configured for a cell.

Optionally, a set of $N_{\text{MBS,init}}^{\text{size}}$ physical resource blocks $\{N_{\text{start}}^{\text{CORESET}}, N_{\text{start}}^{\text{CORESET}} + 1, \ldots, N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where $N_{\text{bundle}} = \left\lceil \left(N_{\text{MBS,init}}^{\text{size}} + \left(N_{\text{MBS},i}^{\text{start}} + N_{\text{start}}^{\text{CORESET}}\right) \bmod L \right) / L \right\rceil$, L = 2 is a bundle size, and $N_{\text{start}}^{\text{CORESET}}$ is a lowest-numbered physical resource block in a control resource set where a corresponding DCI is received.

Optionally, a virtual resource-block bundle 0 and/or a physical resource-block bundle 0 includes $L - \left(\left(N_{\text{MBS},i}^{\text{start}} + N_{\text{start}}^{\text{CORESET}}\right) \bmod L\right)$ virtual resource blocks and/or physical resource blocks, a virtual re-source-block bundle $N_{\text{bundle}}$ - 1 and/or a physical resource-block bundle $N_{\text{bundle}}$ - 1 includes $\left(N_{\text{BWP,init}}^{\text{size}} + N_{\text{BWP},i}^{\text{start}} + N_{\text{start}}^{\text{CORESET}}\right) \bmod L$ virtual resource blocks and/or physical resource blocks if $\left(N_{\text{MBS,init}}^{\text{size}} + N_{\text{MBS},i}^{\text{start}} + N_{\text{start}}^{\text{CORESET}}\right) \bmod L > 0$, otherwise, the virtual resource-block bundle $N_{\text{bundle}}$ - 1 and/or the physical resource-block bundle $N_{\text{bundle}}$ - 1 includes L virtual resource blocks and/or physical resource blocks, and all other virtual resource-block bundles and/or physical resource-block bundles include L virtual resource blocks and/or physical resource blocks.

Optionally, $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \left\lceil \left(N_{\text{MBS},i}^{\text{size}} + \left(N_{\text{MBS},i}^{\text{start}} \bmod L_i\right)\right) / L_i \right\rceil$ resource block-bundles in increasing order of a resource-block number and a resource-block bundle number, where $L_i = 2$.

Optionally, a resource-block bundle 0 includes $L_i - \left(N_{MBS,i}^{start} \bmod L_i\right)$ resource blocks, a resource-block bundle $N_{\text{bundle}}$ - 1 includes $\left(N_{MBS,i}^{start} + N_{MBS,i}^{size}\right) \bmod L_i$ resource blocks if $\left(N_{MBS,i}^{start} + N_{MBS,i}^{size}\right) \bmod L_i > 0$, otherwise, the resource-block bundle $N_{\text{bundle}}$ - 1 includes $L_i$ resource blocks, and all other resource-block bundles include $L_i$ resource blocks.

Optionally, the processing unit is configured to map virtual resource blocks to physical resource blocks according to at least one of: a virtual resource-block bundle $N_{\text{bundle}}$ - 1 being mapped to a physical resource-block bundle $N_{\text{bundle}}$ - 1, or a virtual resource-block bundle $J \in \{0, 1, \ldots, N_{\text{bundle}} - 2\}$ being mapped to a physical resource-block bundle f(j), where f(j) = rC + c, j = cR + r, r = 0, 1, ..., R - 1, c = 0, 1, ..., C - 1, R = 2, and $C = \lfloor N_{bundle} / R \rfloor$.

Optionally, an interval between virtual resource blocks is j ∈ {0, 1, ..., $N_{\text{bundle}}$ - 1}.

Optionally, R indicates that two resource-block bundles are taken as a unit, C indicates a number of units corresponding to $N_{\text{bundle}}$ resource-block bundles when two resource-block bundles are taken as a unit, c indicates one of C units, and r indicates one resource-block bundle in one unit.

Optionally, the processing unit is further configured to map the first number of virtual resource blocks corresponding to the MBS data to the second number of physical resource blocks according to a non-interleaved mapping scheme if the indication information is not received.

In a fourth aspect, a communication apparatus is provided. The communication apparatus is configured to perform the communication method in the second aspect. For example, the communication apparatus can be a chip or a network device. The method can be implemented by software, hardware, or by hardware executing corresponding software.

In a possible implementation, the communication apparatus includes a transceiving unit and a processing unit. The transceiving unit is configured to transmit indication information, where the indication information indicates a mapping scheme from virtual resource blocks corresponding to multicast broadcast service (MBS) data broadcasted to physical resource blocks.

Optionally, the MBS data is a physical downlink shared channel (PDSCH) scheduled with a downlink control information (DCI) format 4_0.

Optionally, the mapping scheme indicated by the indication information is non-interleaved mapping, a virtual resource block n is mapped to a physical resource blocks n, or the virtual resource block n is mapped to a physical resource block $n + N_{\text{start}}^{\text{CORESET}}$, where $N_{\text{start}}^{\text{CORESET}}$ is a lowest-numbered physical resource block in a control resource set where a corresponding DCI is received.

Optionally, the mapping scheme indicated by the indication information is interleaved mapping.

Optionally, a set of $N_{\text{MBS,init}}^{\text{size}}$ virtual resource blocks $\{0, 1, \ldots, N_{\text{MBS,init}}^{\text{size}} - 1\}$ are divided into $N_{\text{bundle}}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a cell, and $N_{\text{MBS,init}}^{\text{size}}$ is a size of an initial downlink bandwidth part if the CORESET 0 is not configured for a cell.

Optionally, a set of $N_{\text{MBS,init}}^{\text{size}}$ physical resource blocks $\{N_{\text{start}}^{\text{CORESET}}, N_{\text{start}}^{\text{CORESET}} + 1, \ldots, N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where $N_{\text{bundle}} = \lceil (N_{\text{MBS,init}}^{\text{size}} + (N_{\text{MBS},i}^{\text{start}} + N_{\text{start}}^{\text{CORESET}}) \bmod L)/L \rceil$, L = 2 is a bundle size, and $N_{\text{start}}^{\text{CORESET}}$ is a lowest-numbered physical resource block in a control resource set where a corresponding DCI is transmitted.

Optionally, a virtual resource-block bundle 0 and/or a physical resource-block bundle 0 includes $L - ((N_{\text{MBS},i}^{\text{start}} + N_{\text{start}}^{\text{CORESET}}) \bmod L)$ virtual resource blocks and/or physical resource blocks, a virtual resource-block bundle $N_{\text{bundle}}$ - 1 and/or a physical resource-block bundle $N_{\text{bundle}}$ - 1 includes $(N_{\text{BWP,init}}^{\text{size}} + N_{\text{BWP},i}^{\text{start}} + N_{\text{start}}^{\text{CORESET}}) \bmod L$ virtual resource blocks and/or physical resource blocks if $(N_{\text{MBS,init}}^{\text{size}} + N_{\text{MBS},i}^{\text{start}} + N_{\text{start}}^{\text{CORESET}}) \bmod L > 0$, otherwise, the virtual resource-block bundle $N_{\text{bundle}}$ - 1 and/or the physical resource-block bundle $N_{\text{bundle}}$ - 1 includes L virtual resource blocks and/or physical resource blocks, and all other virtual resource-block bundles and/or physical resource-block bundles include L virtual resource blocks and/or physical resource blocks.

Optionally, $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \lceil (N_{\text{MBS},i}^{\text{size}} + (N_{\text{MBS},i}^{\text{start}} \bmod L_i))/L_i \rceil$ resource block-bundles in increasing order of a resource-block number and a resource-block bundle number, where $L_i$ = 2.

Optionally, a resource-block bundle 0 includes $L_i - (N_{MBS,i}^{start} \bmod L_i)$ $L_i$ resource blocks, a resource-block bundle $N_{bundle}$ - 1 includes $\left(N_{MBS,i}^{start} + N_{MBS,i}^{size}\right) \bmod L_i$ resource blocks if $\left(N_{MBS,i}^{start} + N_{MBS,i}^{size}\right) \bmod L_i > 0$, otherwise, the resource-block bundle $N_{bundle}$ - 1 includes $L_i$ resource blocks, and all other resource-block bundles include $L_i$ resource blocks.

Optionally, the virtual resource blocks are mapped to the physical resource blocks according to at least one of: a virtual resource-block bundle $N_{bundle}$ - 1 being mapped to a physical resource-block bundle $N_{bundle}$ - 1, or a virtual resource-block bundle j $\in$ {0,1,...,$N_{bundle}$ - 2} being mapped to a physical resource-block bundle f(j), where *f(j) = rC + c, j =* *cR* + r, r = 0,1, ..., *R* - 1, c = 0,1, ..., *C* - 1, *R* = 2, $C = \lfloor N_{bundle}/R \rfloor$.

Optionally, an interval between virtual resource blocks is j $\in$ {0,1, ..., $N_{bundle}$ - 1}.

Optionally, R indicates that two resource-block bundles are taken as a unit, C indicates a number of units corresponding to $N_{bundle}$ resource-block bundles when two resource-block bundles are taken as a unit, c indicates one of C units, and r indicates one resource-block bundle in one unit.

In combination with the third aspect or the fourth aspect, in another possible implementation, the communication apparatus in the third aspect or the fourth aspect includes a processor coupled with a memory. The processor is configured to support the apparatus to perform corresponding functions in the communication method. The memory is coupled with the processor and stores necessary programs (instructions) and/or data of the apparatus. Optionally, the communication apparatus may also include a communication interface configured to support communication between the apparatus and other network elements. Optionally, the memory may be located inside the communication apparatus or outside the communication apparatus.

In combination with the third aspect or the fourth aspect, in another possible implementation, the communication apparatus in the third aspect or the fourth aspect includes a processor and a transceiving apparatus. The processor is coupled with the transceiving apparatus. The processor is configured to execute a computer program or instruction to control the transceiving apparatus to receive and transmit information. When executing the computer program or instruction, the processor is further configured to perform the method through a logic circuit or executing code instructions. The transceiving apparatus may be a transceiver, a transceiving circuit, or an input/output (I/O) interface, which is configured to receive a signal from another communication apparatus other than the communication apparatus and transmit the signal to the processor, or transmit a signal from the processor to another communication apparatus other than the communication apparatus. When the communication apparatus is a chip, the transceiving apparatus is a transceiving circuit or an I/O interface.

When the communication apparatus in the third aspect or the fourth aspect is a chip or a chip module, a transmitting unit may be an output unit, such as an output circuit or a communication interface. A receiving unit may be an input unit, such as an input circuit or a communication interface. When the communication apparatus is a terminal, the transmitting unit may be a transmitter, and the receiving unit may be a receiver.

In a fifth aspect, a computer-readable storage medium is provided. The computer-readable storage medium stores a computer program or instruction. When the computer program or instruction is executed, the methods in the above aspects are performed.

In a sixth aspect, a computer program product including instructions is provided. The instructions, when running on a communication apparatus, cause the communication apparatus to perform the methods in the above aspects.

In a seventh aspect, a communication system is provided. The communication system includes the communication apparatus in the third aspect and the communication apparatus in the fourth aspect.

The communication method provided in the disclosure provides the following beneficial effects. The network device transmits the indication information. The terminal device receives the indication information, and maps the first number of virtual resource blocks corresponding to the MBS data to the second number of physical resource blocks according to the mapping scheme indicated by the indication information. By adopting the method in the disclosure, the resource utilization can be improved.

BRIEF DESCRIPTION OF THE DRAWINGS

FIG. 1A is a schematic diagram of a structure of a communication system provided in embodiments of the disclosure.
FIG. 1B is a schematic diagram of a structure of another communication system provided in embodiments of the disclosure.
FIG. 2 is a schematic diagram of a structure of another communication system provided in embodiments of the disclosure.
FIG. 3 is a flowchart of a communication method provided in embodiments of the disclosure.

FIG. 4 is a schematic diagram of a structure of a communication apparatus provided in embodiments of the disclosure.

FIG. 5 is a schematic diagram of a structure of another communication apparatus provided in embodiments of the disclosure.

FIG. 6 is a simplified schematic diagram of a structure of a terminal device provided in embodiments of the disclosure.

FIG. 7 is a simplified schematic diagram of a structure of a network device provided in embodiments of the disclosure.

DETAILED DESCRIPTION

The technical solutions in embodiments of the disclosure will be described below in conjunction with drawings in the embodiments of the disclosure.

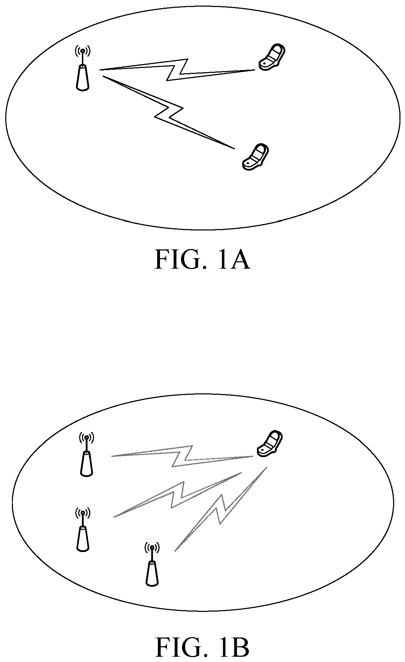

FIG. 1A is a schematic diagram of a communication system involved in the disclosure. The communication system may include one or more network devices (only one is illustrated in FIG. 1A) and one or more terminal devices connected to the network device. One network device may transmit data or control signaling to one or more terminal devices. In another communication system illustrated in FIG. 1B, multiple network devices may simultaneously transmit data or control signaling to one terminal device.

The network device may be any device having a wireless transceiving function, and includes but is not limited to a base station (NodeB), an evolved NodeB (eNodeB), a base station in a 5G communication system, a base station, or a network device in a future communication system, an access node in a Wi-Fi system, a wireless relay node, a wireless backhaul node, and the like. Alternatively, the network device may be a radio controller in a cloud radio access network (CRAN) scenario. The network device may alternatively be a small station, a transmission reference point (TRP), or the like. A specific technology and a specific device form adopted by the network device are not limited in embodiments of the disclosure.

The terminal device is a device having a wireless transceiving function. The terminal device may be deployed on land, for example, deployed indoors or outdoors, and may be a handheld device, a wearable device, or a vehicle-mounted device. The terminal device may be deployed on the water, for example, on a ship, or may be deployed in the air, for example, on an airplane, a balloon, or a satellite. The terminal device may be a mobile phone, a pad, a computer having a wireless transceiving function, a wearable device, an uncrewed aerial vehicle, a helicopter, an airplane, a ship, a robot, a mechanical arm, a smart home device, a virtual reality (VR) terminal device, an augmented reality (AR) terminal device, a wireless terminal in industrial control, a wireless terminal in self-driving, a vehicle, a functional module in a vehicle, a wireless terminal in remote medical, a wireless terminal in a smart grid, a wireless terminal in transportation safety, a wireless terminal (for example, a street lamp) in a smart city, a wireless terminal in a smart home, or the like. Application scenarios are not limited in embodiments of the disclosure. The terminal device may also be sometimes referred to as user equipment (UE), an access terminal device, a UE unit, a mobile station, a remote station, a remote terminal device, a mobile device, a terminal, a wireless communication device, a UE agent, a UE apparatus, or the like. A specific technology and a specific device form adopted by the terminal device are not limited in embodiments of the disclosure.

Optionally, in embodiments of the disclosure, the terminal device or the network device includes a hardware layer, an operating system layer running above the hardware layer, and an application layer running above the operating system layer. The hardware layer includes hardware such as a central processing unit (CPU), a memory management unit (MMU), and a memory (also referred to as a main memory). An operating system may be any one or more computer operating systems that implement service processing through a process, for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of the disclosure is not specifically limited in embodiments of the disclosure, as long as the execution entity can communicate according to the method provided in embodiments of the disclosure by running programs that record codes of the method. For example, the method provided in embodiments of the disclosure may be performed by the terminal device or the network device, or a functional module in the terminal device or the network device that can invoke and execute programs.

In other words, in embodiments of the disclosure, related functions of the terminal device or the network device may be implemented by one device, may be jointly implemented by multiple devices, or may be implemented by one or more functional modules in one device, which is not specifically limited in embodiments of the disclosure. It may be understood that the foregoing function may be a network element in a hardware device, a software function running on dedicated hardware, a combination of hardware and software, or a virtualization function instantiated on a platform (for example, a cloud platform).

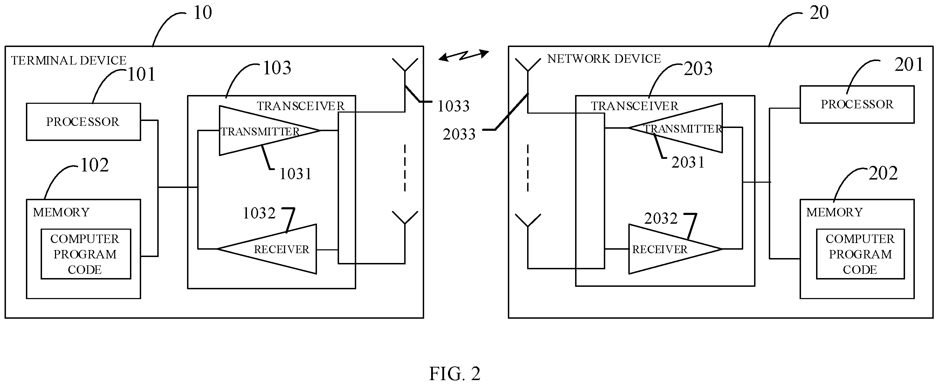

Communication between the network device and the terminal device in the communication system illustrated in FIG. 1A and FIG. 1B may alternatively be represented in another form. As illustrated in FIG. 2, a terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to transmit transmission feedback information to the network device 20 through the antenna 1033. The transmitter 2031 may be configured to transmit the transmission control information to the terminal device 10 through the antenna 2033. The receiver 2032 may be configured to receive, through the antenna 2033, the transmission feedback information transmitted by the terminal device 10.

The processor 101/processor 201 may be a CPU, a microprocessor, an application-specific integrated circuit (ASIC), or one or more integrated circuits configured to control the execution of the program of the disclosure.

The memory 102/the memory 202 may be an apparatus having a storage function. For example, the memory may be a read-only memory (ROM) or another type of static storage device capable of storing static information and instructions, a random access memory (RAM) or another type of dynamic storage device capable of storing information and instructions, or may be an electrically erasable programmable read-only memory (EEPROM), a compact disc read-only memory (CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing desired program code in a form of instructions or data structures and capable of being accessed by a computer, but is not limited thereto. The memory may exist independently, and is connected to the processor through a communication line. Alternatively, the memory may be integrated with the processor.

The memory 102/memory 202 is configured to store computer-executable instructions for executing the solutions of the disclosure, and the processor 101/processor 201 controls the execution. The processor 101/processor 201 is configured to execute the computer-executable instructions stored in the memory 102/memory 202, to implement the communication method provided in embodiments of the disclosure.

Alternatively, in embodiments of the disclosure, the processor 101/processor 201 may perform a processing-related function in the communication method provided in the following embodiments of the disclosure.

The computer-executable instructions in embodiments of the disclosure may also be referred to as application program code, which is not specifically limited in embodiments of the disclosure.

It should be noted that the terms "system" and "network" may be used interchangeably in embodiments of the disclosure. "Multiple" means two or more. In view of this, "multiple" in embodiments of the disclosure may also be understood as "at least two". The term "and/or" describes an association relationship between associated objects and represents that three relationships may exist. For example, A and/or B may represent the following three cases: only A exists, both A and B exist, and only B exists. In addition, the character "/" generally indicates an "or" relationship between the associated objects unless otherwise specified.

The following describes in detail the communication method provided in embodiments of the disclosure.

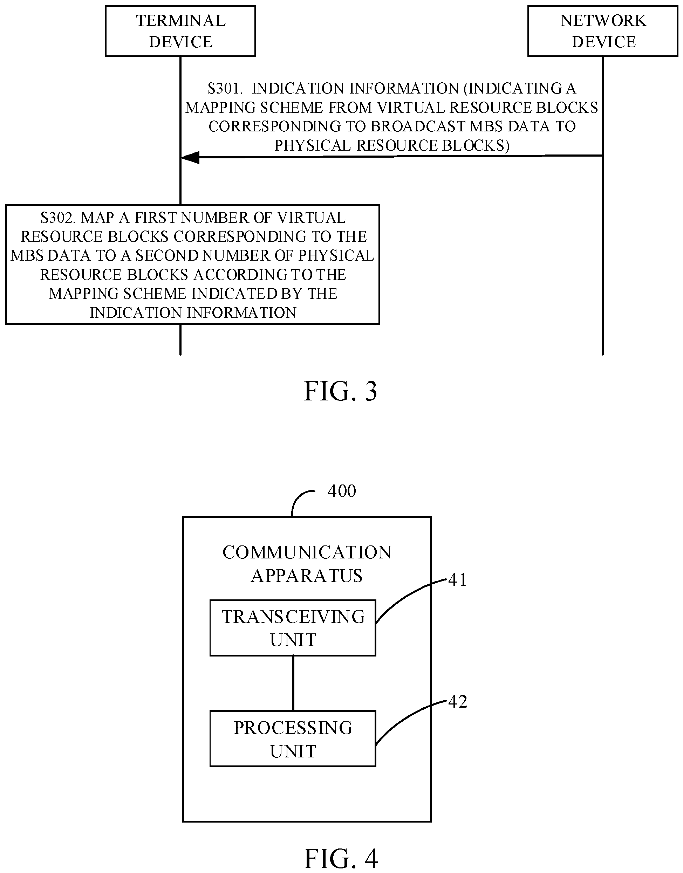

FIG. 3 is a flowchart of a communication method provided in embodiments of the disclosure. Exemplarily, the method may include the following.

S301. A network device transmits instruction information.

Correspondingly, a terminal device receives the indication information.

The indication information indicates a mapping scheme from virtual resource blocks (VRB) corresponding to multicast broadcast service (MBS) data broadcasted to physical resource blocks (PRB). The mapping scheme includes interleaved mapping and/or non-interleaved mapping. Generally, the network device indicates VRB resource information to the terminal device, and a specific physical resource mapping can be obtained by mapping a VRB to a corresponding PRB.

It can be understood that the MBS data may be data carried in a physical downlink shared channel (PDSCH) scheduled with a downlink control information (DCI) format 4_0.

Exemplarily, the network device may carry the indication information in any one or more of a radio resource control (RRC) signaling, a medium access control-control element (MAC-CE), a DCI, etc.

S302. The terminal device maps a first number of virtual resource blocks corresponding to the MBS data to a second number of physical resource blocks according to the mapping scheme indicated by the indication information.

In an implementation, the terminal device may map the virtual resource blocks to the physical resource blocks according to the indicated mapping scheme (interleaved mapping or non-interleaved mapping).

In another implementation, if the terminal device fails to receive the indication information, that is, the network device does not indicate the mapping scheme, the terminal device may adopt non-interleaved mapping by default.

For non-interleaved VRB-to-PRB mapping, a virtual resource block n is mapped to a physical resource block n, or the virtual resource block n is mapped to a physical resource block $n + N_{\text{start}}^{\text{CORESET}}$, where $N_{\text{start}}^{\text{CORESET}}$ is a lowest-numbered physical resource block in a control resource set where a corresponding DCI is received. When two physical downlink control channel (PDCCH) candidates from two linked search space sets indicated by a higher-layer parameter *searchSpaceLinking* are detected, and the two linked search space sets are associated with different control resource sets, a control resource set with the lowest number among the two linked control resource sets is used to determine

$$N_{\text{start}}^{\text{CORESET}}$$ .

It can be understood that the control resource set where the corresponding DCI is received can be considered as a control resource set associated with the DCI format 4_0 that schedules the MBS data, or can be considered as a control resource set associated with a PDCCH carrying the DCI format 4_0 that schedules the MBS data.

If the mapping scheme indicated by the indication information is interleaved mapping, in an implementation, the resource-block bundle/bundles are defined as follows.

A set of $N_{\text{MBS,init}}^{\text{size}}$ virtual resource blocks $\{0, 1, \dots, N_{\text{MBS,init}}^{\text{size}} - 1\}$ are divided into $N_{\text{bundle}}$ virtual resource-block bundles in increasing order of a virtual resource-block number and a virtual bundle number. $N_{\text{MBS,init}}^{\text{size}}$ is a size of a control resource set (CORESET) 0 if the CORESET 0 is configured for a cell. $N_{\text{MBS,init}}^{\text{size}}$ is a size of an initial downlink bandwidth part if the CORESET 0 is not configured for a cell.

A set of $N_{\text{MBS,init}}^{\text{size}}$ physical resource blocks $\{N_{\text{start}}^{\text{CORESET}}, N_{\text{start}}^{\text{CORESET}} + 1, \dots, N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where $N_{\text{bundle}} = \left\lceil \left(N_{\text{MBS,init}}^{\text{size}} + \left(N_{\text{MBS},i}^{\text{start}} + N_{\text{start}}^{\text{CORESET}}\right) \bmod L \right)/L \right\rceil$, $L = 2$ is a bundle size, and $N_{\text{start}}^{\text{CORESET}}$ is a lowest-numbered physical resource block in a control resource set where a corresponding DCI is received. $N_{\text{MBS},i}^{\text{start}}$ is a lowest-numbered physical resource block in an MBS common frequency resource (CFR). The CFR may be configured by system information and used for MBS, for MBS broadcast, or for MBS control channel (MCCH) and/or MBS traffic channel (MTCH).

It can be understood that the control resource set where the corresponding DCI is received can be considered as a control resource set associated with the DCI format 4_0 that schedules the MBS data, or can be considered as a control resource set associated with a PDCCH carrying the DCI format 4_0 that schedules the MBS data.

When two PDCCH candidates from two linked search space sets indicated by a higher-layer parameter *searchSpaceLinking* are detected, and the two linked search space sets are associated with different control resource sets, a control resource set with the lowest number among the two linked control resource sets is used to determine $N_{\text{start}}^{\text{CORESET}}$ .

A resource-block bundle 0 includes $L - \left(\left(N_{\text{MBS},i}^{\text{start}} + N_{\text{start}}^{\text{CORESET}}\right) \bmod L\right)$ resource blocks. A resource-block bundle $N_{\text{bundle}}$ - 1 includes $\left(N_{\text{BWP,init}}^{\text{size}} + N_{\text{BWP},i}^{\text{start}} + N_{\text{start}}^{\text{CORESET}}\right) \bmod L$ resource blocks if $\left(N_{\text{MBS,init}}^{\text{size}} + N_{\text{MBS},i}^{\text{start}} + N_{\text{start}}^{\text{CORESET}}\right) \bmod L > 0$, otherwise, the resource-block bundle $N_{\text{bundle}}$ - 1 includes L resource blocks. All other resource-block bundles except the resource-block bundle 0 and the resource-block bundle $N_{\text{bundle}}$ - 1 include L resource blocks.

It can be understood that the resource block may be a virtual resource block, a physical resource block, or a virtual resource block and a physical resource block.

It can be understood that the resource-block bundle may be a virtual resource-block bundle, a physical resource-block bundle, or a virtual resource-block bundle and a physical resource-block bundle.

It can be understood that the bundle number may be the virtual resource-block bundle number, the physical resource-block bundle number, or the virtual resource-block bundle number and the physical resource-block bundle number.

It can also understandable that, in the $N_{\text{MBS,init}}^{\text{size}}$ virtual resource blocks, a virtual resource-block bundle 0 includes $L - \left(\left(N_{\text{MBS},i}^{\text{start}} + N_{\text{start}}^{\text{CORESET}}\right) \bmod L\right)$ virtual resource blocks. A virtual resource-block bundle $N_{\text{bundle}}$ - 1

includes $\left(N_{\text{BWP,init}}^{\text{size}} + N_{\text{BWP},i}^{\text{start}} + N_{\text{start}}^{\text{CORESET}}\right) \bmod L$ virtual resource blocks if

$\left(N_{\text{MBS,init}}^{\text{size}} + N_{\text{MBS},i}^{\text{start}} + N_{\text{start}}^{\text{CORESET}}\right) \bmod L > 0$, otherwise, the virtual resource-block bundle $N_{\text{bundle}}$ - 1 includes L virtual resource blocks. All other virtual resource-block bundles except the virtual resource-block bundle 0 and the virtual resource-block bundle $N_{\text{bundle}}$ - 1 include L virtual resource blocks.

In the $N_{\text{MBS,init}}^{\text{size}}$ physical resource blocks, a physical resource-block bundle 0 includes $L - \left(\left(N_{\text{MBS},i}^{\text{start}} + N_{\text{start}}^{\text{CORESET}}\right) \bmod L\right)$ resource blocks. A physical resource-block bundle $N_{\text{bundle}}$ - 1 includes

$\left(N_{\text{BWP,init}}^{\text{size}} + N_{\text{BWP},i}^{\text{start}} + N_{\text{start}}^{\text{CORESET}}\right) \bmod L$ physical resource blocks if

$\left(N_{\text{MBS,init}}^{\text{size}} + N_{\text{MBS},i}^{\text{start}} + N_{\text{start}}^{\text{CORESET}}\right) \bmod L > 0$, otherwise, the physical resource-block bundle $N_{\text{bundle}}$ - 1 includes L physical resource blocks. All other physical resource-block bundles except the physical resource-block bundle 0 and the physical resource-block bundle $N_{\text{bundle}}$ - 1 include L physical resource blocks.

In another implementation, the resource-block bundle/bundles are defined as follows. $N_{\text{MBS},i}^{\text{size}}$ resource blocks in an MBS CFR i with a starting position $N_{\text{MBS},i}^{\text{start}}$ are divided into $N_{\text{bundle}} = \left\lceil \left(N_{\text{MBS},i}^{\text{size}} + \left(N_{\text{MBS},i}^{\text{start}} \bmod L_i\right)\right)/L_i \right\rceil$ resource-block bundles in increasing order of a resource-block number and a resource-block bundle number, where $L_i = 2$. The CFR i may be configured by system information and used for MBS, for MBS broadcast, or for MCCH and/or MTCH.

In the $N_{\text{MBS},i}^{\text{size}}$ resource blocks, a resource-block bundle 0 includes $L_i$ - $\left(N_{MBS,i}^{start} \bmod L_i\right)$ resource blocks. A resource-block bundle $N_{\text{bundle}}$ - 1 includes $\left(N_{MBS,i}^{start} + N_{MBS,i}^{size}\right) \bmod L_i$ resource blocks if $\left(N_{MBS,i}^{start} + N_{MBS,i}^{size}\right) \bmod L_i > 0$, otherwise, the resource-block bundle $N_{\text{bundle}}$ - 1 includes $L_i$ resource blocks. All other resource-block bundles except the resource-block bundle 0 and the resource-block bundle $N_{\text{bundle}}$ - 1 include $L_i$ resource blocks.

It can be understood that the resource block may be a virtual resource block, a physical resource block, or a virtual resource block and a physical resource block.

It can be understood that the resource-block bundle may be a virtual resource-block bundle, a physical resource-block bundle, or a virtual resource-block bundle and a physical resource-block bundle.

It can be understood that the bundle number may be the virtual resource-block bundle number, the physical resource-block bundle number, or the virtual resource-block bundle number and the physical resource-block bundle number.

It can also be understood that, in the $N_{\text{MBS},i}^{\text{size}}$ virtual resource blocks, a virtual resource-block bundle 0 includes

$L_i - \left(N_{MBS,i}^{start} \bmod L_i\right)$ virtual resource blocks. A virtual resource-block bundle $N_{\text{bundle}}$ - 1 includes

$\left(N_{MBS,i}^{start} + N_{MBS,i}^{size}\right) \bmod L_i$ virtual resource blocks if $\left(N_{MBS,i}^{start} + N_{MBS,i}^{size}\right) \bmod L_i > 0$, otherwise, the virtual resource-block bundle $N_{\text{bundle}}$ - 1 includes $L_i$ virtual resource blocks. All other virtual resource-block bundles except the virtual resource-block bundle 0 and the virtual resource-block bundle $N_{\text{bundle}}$ - 1 include $L_i$ virtual resource blocks.

In the $N_{\text{MBS},i}^{\text{size}}$ physical resource blocks, a physical resource-block bundle 0 includes

$L_i - \left(N_{MBS,i}^{start} \bmod L_i\right)$ physical resource blocks. A physical resource-block bundle $N_{\text{bundle}}$ - 1 includes

$\left(N_{MBS,i}^{start} + N_{MBS,i}^{size}\right) \bmod L_i$ physical resource blocks if $\left(N_{MBS,i}^{start} + N_{MBS,i}^{size}\right) \bmod L_i > 0$, otherwise, the physical resource-block bundle $N_{\text{bundle}}$ - 1 includes $L_i$ physical resource blocks. All other physical resource-block bundles except the physical resource-block bundle 0 and the physical resource-block bundle $N_{bundle}$ - 1 include $L_i$ physical resource blocks.

Further, in combination with the definition of the resource-block bundle in any of above implementations, the virtual resource blocks can be mapped to the physical resource blocks according to the following. A virtual resource-block bundle $N_{bundle}$ - 1 is mapped to a physical resource-block bundle $N_{bundle}$ - 1. A virtual resource-block bundle $j \in \{0,1,...,N_{bundle}$ - 2\} is mapped to a physical resource-block bundle f(j), where

$$f(j) = rC + c$$

$$j = cR + r$$

$$r = 0,1,...,R-1$$

$$c = 0,1,...,C-1$$

$$R = 2$$

$$C = \lfloor N_{bundle}/R \rfloor$$

Optionally, an interval between virtual resource blocks is $j \in \{0,1, ..., N_{bundle}$ - 1\}.

Optionally, R indicates that two resource-block bundles are taken as a unit, C indicates a number of units corresponding to $N_{bundle}$ resource-block bundles when two resource-block bundles are taken as a unit, c indicates one of C units, and r indicates one resource-block bundle in one unit.

According to the communication method provided in embodiments of the disclosure, the network device transmits the indication information, and the terminal device receives the indication information, and maps the first number of virtual resource blocks corresponding to the MBS data to the second number of physical resource blocks according to the mapping scheme indicated by the indication information, thereby improving the resource utilization.

It can be understood that, in above embodiments, the method and/or step implemented by the terminal device can also be implemented by a component (such as a chip or a circuit) that can be used in the terminal device, and the method and/or step implemented by the network device can also be implemented by a component (such as a chip or a circuit) that can be used in the network device.

The above mainly introduces the solution provided in embodiments of the disclosure from the perspective of interaction between various network elements. Accordingly, embodiments of the disclosure also provide a communication apparatus. The communication apparatus is configured to implement the above various methods. The communication apparatus can be the terminal device in above method embodiments or a component that can be used in the terminal device. Alternatively, the communication apparatus can be the network device in above method embodiments or a component that can be used in the network device. It can be understood that, in order to implement the above function, the communication apparatus includes hardware structures and/or software modules for performing corresponding functions. Those skilled in the art will appreciate that, in combination with units and algorithm steps of various examples described in embodiments of the disclosure, the disclosure can be implemented by hardware or a combination of hardware and computer software. Whether a function is executed by means of hardware or computer software driving hardware depends on the specific application and design constraints of the technical solution. Those skilled in the art can use different methods with regard to each specific application to implement the described functions, but such implementation should not be regarded as lying beyond the scope of the disclosure.

In embodiments of the disclosure, functional modules of the communication apparatus can be divided according to above method embodiments. For example, various functional modules can be divided according to various functions, or two or more functions can be integrated into one processing module. The above integrated module can be implemented by hardware or by a software functional module. It should be noted that the division of modules in embodiments of the disclosure is schematic and is only a division of logical functions. There may be other division manners in actual implementation.

Based on the same concept of the above communication method, the disclosure also provides the following communication apparatus.

FIG. 4 is a schematic diagram of a structure of a communication apparatus provided in embodiments of the disclosure. The communication apparatus 400 includes a transceiving unit 41 and a processing unit 42.

The transceiving unit 41 is configured to receive indication information, where the indication information indicates a mapping scheme from virtual resource blocks corresponding to multicast broadcast service (MBS) data broadcasted to physical resource blocks. The processing unit 42 is configured to map a first number of virtual resource blocks corresponding to the MBS data to a second number of physical resource blocks according to the mapping scheme indicated by the indication information.

Optionally, the MBS data is a physical downlink shared channel (PDSCH) scheduled with a downlink control information (DCI) format 4_0.

Optionally, the mapping scheme indicated by the indication information is non-interleaved mapping, and the processing unit is configured to perform any one of: mapping a virtual resource block n to a physical resource block n, or mapping the virtual resource block n to a physical resource block $n + N_{\text{start}}^{\text{CORESET}}$, where $N_{\text{start}}^{\text{CORESET}}$ is a lowest-numbered physical resource block in a control resource set where a corresponding DCI is received.

Optionally, the mapping scheme indicated by the indication information is interleaved mapping.

Optionally, a set of $N_{\text{MBS,init}}^{\text{size}}$ virtual resource blocks $\{0, 1, \dots, N_{\text{MBS,init}}^{\text{size}} - 1\}$ are divided into $N_{\text{bundle}}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a cell, and $N_{\text{MBS,init}}^{\text{size}}$ is a size of an initial downlink bandwidth part if the CORESET 0 is not configured for a cell.

Optionally, a set of $N_{\text{MBS,init}}^{\text{size}}$ physical resource blocks $\{N_{\text{start}}^{\text{CORESET}}, N_{\text{start}}^{\text{CORESET}} + 1, \dots, N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where $N_{\text{bundle}} = \lceil (N_{\text{MBS,init}}^{\text{size}} + (N_{\text{MBS},i}^{\text{start}} + N_{\text{start}}^{\text{CORESET}}) \bmod L)/L \rceil$, L = 2 is a bundle size, and $N_{\text{start}}^{\text{CORESET}}$ is a lowest-numbered physical resource block in a control resource set where a corresponding DCI is received.

Optionally, a virtual resource-block bundle 0 and/or a physical resource-block bundle 0 includes $L - ((N_{\text{MBS},i}^{\text{start}} + N_{\text{start}}^{\text{CORESET}}) \bmod L)$ virtual resource blocks and/or physical resource blocks, a virtual resource-block bundle $N_{\text{bundle}}$ - 1 and/or a physical resource-block bundle $N_{\text{bundle}}$ - 1 includes $(N_{\text{BWP,init}}^{\text{size}} + N_{\text{BWP},i}^{\text{start}} + N_{\text{start}}^{\text{CORESET}}) \bmod L$ virtual resource blocks and/or physical resource blocks if $(N_{\text{MBS,init}}^{\text{size}} + N_{\text{MBS},i}^{\text{start}} + N_{\text{start}}^{\text{CORESET}}) \bmod L > 0$, otherwise, the virtual resource-block bundle $N_{\text{bundle}}$ - 1 and/or the physical resource-block bundle $N_{\text{bundle}}$ - 1 includes L virtual resource blocks and/or physical resource blocks, and all other virtual resource-block bundles and/or physical resource-block bundles include L virtual resource blocks and/or physical resource blocks.

Optionally, $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \lceil (N_{\text{MBS},i}^{\text{size}} + (N_{\text{MBS},i}^{\text{start}} \bmod L_i))/L_i \rceil$ resource-block bundles in increasing order of a resource-block number and a resource-block bundle number, where $L_i = 2$.

Optionally, a resource-block bundle 0 includes $L_i - (N_{MBS,i}^{start} \bmod L_i)$ resource blocks, a resource-block bundle $N_{\text{bundle}}$ - 1 includes $(N_{MBS,i}^{start} + N_{MBS,i}^{size}) \bmod L_i$ resource blocks if $(N_{MBS,i}^{start} + N_{MBS,i}^{size}) \bmod L_i > 0$, otherwise, the resource-block bundle $N_{\text{bundle}}$ - 1 includes $L_i$ resource blocks, and all other resource-block bundles include $L_i$ resource blocks.

Optionally, the processing unit 42 is configured to map virtual resource blocks to physical resource blocks according to at least one of: a virtual resource-block bundle $N_{\text{bundle}}$ - 1 being mapped to a physical resource-block bundle $N_{\text{bundle}}$ - 1, or a virtual resource-block bundle $j \in \{0, 1, \dots, N_{\text{bundle}} - 2\}$ being mapped to a physical resource-block bundle f(j),

where $f(j) = rC + c$, $j = cR + r$, $r = 0,1, ...,R - 1$, $c = 0,1, ..., C - 1$, $R = 2$, and $C = \lfloor N_{bundle}/R \rfloor$.

Optionally, an interval between virtual resource blocks is $j \in \{0,1, ..., N_{bundle} - 1\}$.

Optionally, R indicates that two resource-block bundles are taken as a unit, C indicates a number of units corresponding to $N_{bundle}$ resource-block bundles when two resource-block bundles are taken as a unit, c indicates one of C units, and r indicates one resource-block bundle in one unit.

Optionally, the processing unit 42 is further configured to map the first number of virtual resource blocks corresponding to the MBS data to the second number of physical resource blocks according to a non-interleaved mapping scheme if the indication information is not received.

According to the communication apparatus provided in embodiments of the disclosure, the communication apparatus receives the indication information transmitted by a network device, and maps the first number of virtual resource blocks corresponding to the MBS data to the second number of physical resource blocks according to the mapping scheme indicated by the indication information, thereby improving the resource utilization.

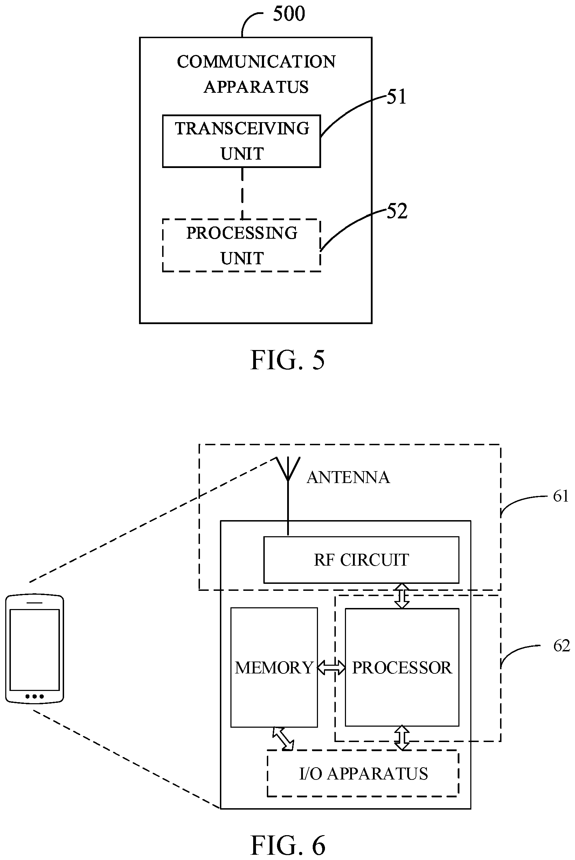

FIG. 5 is a schematic diagram of a structure of another communication apparatus provided in embodiments of the disclosure. The communication apparatus 500 includes: a transceiving unit 51 and a processing unit 52.

The transceiving unit 51 is configured to transmit indication information, where the indication information indicates a mapping scheme from virtual resource blocks corresponding to multicast broadcast service (MBS) data broadcasted to physical resource blocks.

Optionally, the MBS data is a physical downlink shared channel (PDSCH) scheduled with a downlink control information (DCI) format 4_0.

Optionally, the mapping scheme indicated by the indication information is non-interleaved mapping, a virtual resource block n is mapped to a physical resource blocks n, or the virtual resource block n is mapped to a physical resource block $n + N_{\text{start}}^{\text{CORESET}}$, where $N_{\text{start}}^{\text{CORESET}}$ is a lowest-numbered physical resource block in a control resource set where a corresponding DCI is received.

Optionally, the mapping scheme indicated by the indication information is interleaved mapping.

Optionally, a set of $N_{\text{MBS,init}}^{\text{size}}$ virtual resource blocks $\{0,1, ..., N_{\text{MBS,init}}^{\text{size}} - 1\}$ are divided into $N_{bundle}$ virtual resource-block bundles in increasing order of a virtual resource-block number and a virtual bundle number, where $N_{\text{MBS,init}}^{\text{size}}$ is a size of a control resource set (CORESET) 0 if the CORESET 0 is configured for a cell, and $N_{\text{MBS,init}}^{\text{size}}$ is a size of an initial downlink bandwidth part if the CORESET 0 is not configured for a cell.

Optionally, a set of $N_{\text{MBS,init}}^{\text{size}}$ physical resource blocks $\{N_{\text{start}}^{\text{CORESET}}, N_{\text{start}}^{\text{CORESET}} + 1, ..., N_{\text{start}}^{\text{CORESET}} + N_{\text{MBS,init}}^{\text{size}} - 1\}$ are divided into $N_{bundle}$ physical resource-block bundles in increasing order of a physical resource-block number and a physical bundle number, where $N_{\text{bundle}} = \lceil (N_{\text{MBS,init}}^{\text{size}} + (N_{\text{MBS},i}^{\text{start}} + N_{\text{start}}^{\text{CORESET}}) \bmod L)/L \rceil$, L = 2 is a bundle size, and $N_{\text{start}}^{\text{CORESET}}$ is a lowest-numbered physical resource block in a control resource set where a corresponding DCI is transmitted.

Optionally, a virtual resource-block bundle 0 and/or a physical resource-block bundle 0 includes $L - ((N_{\text{MBS},i}^{\text{start}} + N_{\text{start}}^{\text{CORESET}}) \bmod L)$ virtual resource blocks and/or physical resource blocks, a virtual resource-block bundle $N_{bundle}$ - 1 and/or a physical resource-block bundle $N_{bundle}$ - 1 includes $(N_{\text{BWP,init}}^{\text{size}} + N_{\text{BWP},i}^{\text{start}} + N_{\text{start}}^{\text{CORESET}}) \bmod L$ virtual resource blocks and/or physical resource blocks if $(N_{\text{MBS,init}}^{\text{size}} + N_{\text{MBS},i}^{\text{start}} + N_{\text{start}}^{\text{CORESET}}) \bmod L > 0$, otherwise, the virtual resource-block bundle $N_{bundle}$ - 1 and/or the physical resource-block bundle $N_{bundle}$ - 1 includes L virtual resource blocks and/or physical resource blocks, and all other virtual resource-block bundles and/or physical resource-block bundles include L virtual resource blocks and/or physical resource blocks.

Optionally, $N_{\text{MBS},i}^{\text{size}}$ resource blocks in an MBS common frequency resource (CFR) i with a starting position

$N_{\text{MBS},i}^{\text{start}}$ are divided into $N_{\text{bundle}} = \left\lceil \left( N_{\text{MBS},i}^{\text{size}} + \left( N_{\text{MBS},i}^{\text{start}} \bmod L_i \right) \right) / L_i \right\rceil$ resource-block bundles in increasing order of a resource-block number and a resource-block bundle number, where $L_i$ = 2.

Optionally, a resource-block bundle 0 includes $L_i - \left( N_{MBS,i}^{start} \bmod L_i \right)$ resource blocks, a resource-block bundle $N_{\text{bundle}}$ - 1 includes $\left( N_{MBS,i}^{start} + N_{MBS,i}^{size} \right) \bmod L_i$ resource blocks if $\left( N_{MBS,i}^{start} + N_{MBS,i}^{size} \right) \bmod L_i > 0$, otherwise, the resource-block bundle $N_{\text{bundle}}$ - 1 includes $L_i$ resource blocks, and all other resource-block bundles include $L_i$ resource blocks.

Optionally, the virtual resource blocks are mapped to the physical resource blocks according to at least one of: a virtual resource-block bundle $N_{\text{bundle}}$ - 1 being mapped to a physical resource-block bundle $N_{\text{bundle}}$ - 1, or a virtual resource-block bundle j ∈ {0,1,...,$N_{\text{bundle}}$ - 2} being mapped to a physical resource-block bundle f(j), where *f(j)* = *rC* + *c*, *j* = *cR* + r, r = 0,1, ..., *R* - 1, c = 0,1, ..., *C* - 1, *R* = 2, $C = \lfloor N_{bundle}/R \rfloor$.

Optionally, an interval between virtual resource blocks is j ∈ {0,1, ..., $N_{\text{bundle}}$ - 1}.

Optionally, R indicates that two resource-block bundles are taken as a unit, C indicates a number of units corresponding to $N_{\text{bundle}}$ resource-block bundles when two resource-block bundles are taken as a unit, c indicates one of C units, and r indicates one resource-block bundle in one unit.

According to the communication apparatus provided in embodiments of the disclosure, the communication apparatus transmits the indication information, and a terminal device receives the indication information, and maps the first number of virtual resource blocks corresponding to the MBS data to the second number of physical resource blocks according to the mapping scheme indicated by the indication information, thereby improving the resource utilization.

FIG. 6 is a simplified schematic diagram of a structure of a terminal device. For ease of understanding and illustration, in FIG. 6, a mobile phone is taken as an example of the terminal device. As illustrated in FIG. 6, the terminal device includes a processor, a memory, a radio frequency (RF) circuit, an antenna, and an input/output (I/O) apparatus. The processor is mainly configured to process a communication protocol and communication data, control the terminal device, execute a software program, process data of the software program, and the like. The memory is mainly configured to store a software program and data. The RF circuit is mainly configured for conversion between a baseband signal and a RF signal and processing the RF signal. The antenna is mainly configured to transmit and receive the RF signal in a form of an electromagnetic wave. The I/O apparatus is, for example, a touchscreen, a display, or a keyboard, and is mainly configured to receive data input by a user and output data to the user. It should be noted that some types of terminal devices may have no I/O apparatus.

When data needs to be transmitted, the processor performs baseband processing on the to-be-transmitted data, and then outputs a baseband signal to the RF circuit. The RF circuit performs RF processing on the baseband signal and then transmits a RF signal to the outside in a form of an electromagnetic wave through the antenna. When data is transmitted to the terminal device, the RF circuit receives a RF signal through the antenna, converts the RF signal into a baseband signal, and outputs the baseband signal to the processor, and the processor converts the baseband signal into data and processes the data. For ease of description, only one memory and one processor are illustrated in FIG. 6. In an actual terminal product, there may be one or more processors and one or more memories. The memory may also be referred to as a storage medium, a storage device, or the like. The memory may be disposed independent of the processor, or may be integrated with the processor, which is not limited in embodiments of the disclosure.

In embodiments of the disclosure, the antenna and the RF circuit having transceiving functions may be considered as a receiving unit and a sending unit (which may also be collectively referred to as a transceiving unit) of the terminal device, and the processor having a processing function may be considered as a processing unit of the terminal device. As illustrated in FIG. 6, the terminal device includes a transceiving unit 61 and a processing unit 62. The transceiving unit 61 may also be referred to as a receiver/sender (transmitter), a receiver/transmitter circuit, or the like. The processing unit 62 may also be referred to as a processor, a processing board, a processing module, a processing apparatus, or the like. The transceiving unit 61 is configured to implement a function of the transceiving unit 41 in the embodiment illustrated in FIG. 4. The processing unit 62 is configured to implement a function of the processing unit 42 in the embodiment illustrated in FIG. 4.

For example, in an embodiment, the transceiving unit 61 is configured to perform functions performed by the terminal in S301 in the embodiment illustrated in FIG. 3, and the processing unit 62 is configured to perform S302 in the embodiment illustrated in FIG. 3.

According to the communication apparatus provided in embodiments of the disclosure, the communication apparatus receives the indication information transmitted by a network device, and maps the first number of virtual resource blocks corresponding to the MBS data to the second number of physical resource blocks according to the mapping scheme indicated by the indication information, thereby improving the resource utilization.

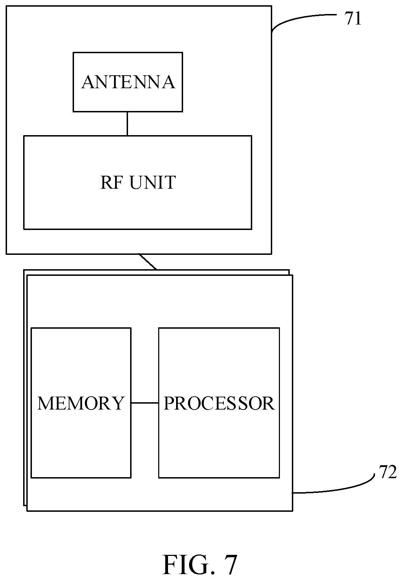

FIG. 7 is a simplified schematic diagram of a structure of a network device. The network device includes a part for RF signal transceiving and conversion and a part 72, and the part for RF signal transceiving and conversion includes a transceiving unit 71. The part for RF signal transceiving and conversion is mainly configured for transceiving of a RF signal and the conversion between a RF signal and a baseband signal. The part 72 is mainly configured for baseband processing, controlling the network device, and the like. The transceiving unit 71 may also be referred to as a receiver/sender (transmitter), a receiving/transmitting circuit, or the like. The part 72 is usually a control center of the network device, may be usually referred to as a processing unit, and is configured to control the network device to perform the steps performed by the network device in FIG. 3. For details, reference can be made to the foregoing descriptions of the related parts. The transceiving unit 71 may be configured to implement a function of the transceiving unit 51 in the embodiment illustrated in FIG. 5. The part 72 is configured to implement a function of the processing unit 52 in the embodiment illustrated in FIG. 5.

The part 72 may include one or more boards. Each board may include one or more processors and one or more memories. The processor is configured to read and execute a program in the memory to implement a baseband processing function and control the network device. If there are multiple boards, the boards may be interconnected to improve a processing capability. In an optional implementation, multiple boards may share one or more processors, multiple boards may share one or more memories, or multiple boards may simultaneously share one or more processors.

For example, in an embodiment, the transceiving unit 71 is configured to perform functions performed by the network device in S301 in the embodiment illustrated in FIG. 3.

According to the communication apparatus provided in embodiments of the disclosure, the communication apparatus transmits the indication information, a terminal device receives the indication information, and maps the first number of virtual resource blocks corresponding to the MBS data to the second number of physical resource blocks according to the mapping scheme indicated by the indication information, thereby improving the resource utilization.

Embodiments of the disclosure further provide a computer-readable storage medium. The computer-readable storage medium stores a computer program or instruction. When the computer program or the instruction is executed, the methods in the foregoing embodiments are performed.

Embodiments of the disclosure further provide a computer program product including instructions. The instructions, when running on a computer, cause the computer to perform the methods in the foregoing embodiments.

Embodiments of the disclosure further provide a communication system. The communication system includes the foregoing communication apparatus.

It should be noted that the foregoing units or one or more of the units may be implemented by software, hardware, or a combination thereof. When any one of the units or the units are implemented by the software, the software exists in a form of computer program instructions, and is stored in a memory. A processor may be configured to execute the program instructions to implement the foregoing method procedures. The processor may be built in a system on chip (SoC) or an ASIC, or may be an independent semiconductor chip. In addition to a core for executing software instructions to perform operations or processing, the processor may further include a necessary hardware accelerator, for example, a field programmable gate array (FPGA), a programmable logic device (PLD), or a logic circuit that implements a dedicated logic operation.

When the foregoing units or units are implemented by hardware, the hardware may be any one or any combination of a CPU, a microprocessor, a digital signal processing (DSP) chip, a microcontroller unit (MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, embodiments of the disclosure further provide a chip system. The chip system includes at least one processor and an interface. The at least one processor is coupled with a memory through the interface. The at least one processor, when running a computer program or instruction in the memory, causes the chip system to perform the method in any of the foregoing method embodiments. Optionally, the chip system may include a chip, or may include a chip and another discrete device, which is not specifically limited in embodiments of the disclosure.

It should be understood that unless otherwise specified, "/" in descriptions of the disclosure indicates an "or" relationship between associated objects. For example, A/B may indicate A or B. A and B may be singular or plural. In addition, in the descriptions of the disclosure, "multiple" means two or more than two unless otherwise specified. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of the disclosure, terms such as "first" and "second" are used in embodiments of the disclosure to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of the disclosure, the term such as "example" or "for example" is used to represent giving an example, an illustration, or a description. Any embodiment or design scheme described as an "example" or "for example" in embodiments of the disclosure should not be explained as being more preferred or having more advantages than another embodiment or design scheme. Exactly, use of the term such as "example" or "for example" is intended to present a relative concept in a specific manner for ease of understanding.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of the disclosure are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable media accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

Although the disclosure is described with reference to embodiments, in a process of implementing the disclosure that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

**Claims**

1. A communication method, comprising:

   receiving indication information, wherein the indication information indicates a mapping scheme from virtual resource blocks corresponding to multicast broadcast service (MBS) data broadcasted to physical resource blocks; and
   mapping a first number of virtual resource blocks corresponding to the MBS data to a second number of physical resource blocks according to the mapping scheme indicated by the indication information.

2. The method of claim 1, wherein the MBS data is a physical downlink shared channel (PDSCH) scheduled with a downlink control information (DCI) format 4_0.

3. The method of claim 1 or 2, wherein the mapping scheme indicated by the indication information is non-interleaved mapping, and mapping the first number of virtual resource blocks corresponding to the MBS data to the second number of physical resource blocks comprises any one of:

   mapping a virtual resource block n to a physical resource block n; or

   mapping the virtual resource block n to a physical resource block $n + N_{\text{start}}^{\text{CORESET}}$, wherein $N_{\text{start}}^{\text{CORESET}}$ is a lowest-numbered physical resource block in a control resource set where a corresponding DCI is received.

4. The method of any of claims 1 to 3, wherein the mapping scheme indicated by the indication information is interleaved mapping.

5. The method of claim 4, wherein a set of $N_{\text{MBS,init}}^{\text{size}}$ virtual resource blocks $\{0, 1, ..., N_{\text{MBS,init}}^{\text{size}} - 1\}$ are divided into $N_{\text{bundle}}$ virtual resource-block bundles in increasing order of a virtual resource-block number and a virtual bundle number, wherein

$N_{\text{MBS,init}}^{\text{size}}$ is a size of a control resource set (CORESET) 0 if the CORESET 0 is configured for a cell; and

$N_{\text{MBS,init}}^{\text{size}}$ is a size of an initial downlink bandwidth part if the CORESET 0 is not configured for a cell.

6. The method of claim 5, wherein a set of $N_{\text{MBS,init}}^{\text{size}}$ physical resource blocks $\{N_{\text{start}}^{\text{CORESET}}, N_{\text{start}}^{\text{CORESET}} + 1, ..., N_{\text{start}}^{\text{CORESET}} + N_{\text{MBS,init}}^{\text{size}} - 1\}$ are divided into $N_{\text{bundle}}$ physical resource-block bundles in increasing order of a physical resource-block number and a physical bundle number, where $N_{\text{bundle}} = \left\lceil \left( N_{\text{MBS,init}}^{\text{size}} + \left( N_{\text{MBS},i}^{\text{start}} + N_{\text{start}}^{\text{CORESET}} \right) \bmod L \right) / L \right\rceil$, L = 2 is a bundle size, and $N_{\text{start}}^{\text{CORESET}}$ is a lowest-numbered physical resource block in a control resource set where a corresponding DCI is received.

7. The method of claim 6, wherein a virtual resource-block bundle 0 and/or a physical resource-block bundle 0 comprises $L - \left( \left( N_{\text{MBS},i}^{\text{start}} + N_{\text{start}}^{\text{CORESET}} \right) \bmod L \right)$ virtual resource blocks and/or physical resource blocks;

a virtual resource-block bundle $N_{\text{bundle}}$ - 1 and/or a physical resource-block bundle $N_{\text{bundle}}$ - 1 comprises $\left( N_{\text{BWP,init}}^{\text{size}} + N_{\text{BWP},i}^{\text{start}} + N_{\text{start}}^{\text{CORESET}} \right) \bmod L$ virtual resource blocks and/or physical resource blocks if $\left( N_{\text{MBS,init}}^{\text{size}} + N_{\text{MBS},i}^{\text{start}} + N_{\text{start}}^{\text{CORESET}} \right) \bmod L > 0$, otherwise, the virtual resource-block bundle $N_{\text{bundle}}$ - 1 and/or the physical resource-block bundle $N_{\text{bundle}}$ - 1 comprises L virtual resource blocks and/or physical resource blocks; and
all other virtual resource-block bundles and/or physical resource-block bundles comprise L virtual resource blocks and/or physical resource blocks.

8. The method of claim 4, wherein $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \left\lceil \left( N_{\text{MBS},i}^{\text{size}} + \left( N_{\text{MBS},i}^{\text{start}} \bmod L_i \right) \right) / L_i \right\rceil$ resource-block bundles in increasing order of a resource-block number and a resource-block bundle number, where $L_i$ = 2.

9. The method of claim 8, wherein a resource-block bundle 0 comprises $L_i$ - $\left( N_{MBS,i}^{start} \bmod L_i \right)$ resource blocks;

a resource-block bundle $N_{\text{bundle}}$ - 1 comprises $\left( N_{MBS,i}^{start} + N_{MBS,i}^{size} \right) \bmod L_i$ resource blocks if $\left( N_{MBS,i}^{start} + N_{MBS,i}^{size} \right) \bmod L_i > 0$, otherwise, the resource-block bundle $N_{\text{bundle}}$ - 1 comprises $L_i$ resource blocks; and
all other resource-block bundles comprise $L_i$ resource blocks.

10. The method of any of claims 1 to 9, wherein mapping the first number of virtual resource blocks corresponding to the MBS data to the second number of physical resource blocks according to the mapping scheme indicated by the indication information comprises:
mapping the virtual resource blocks to the physical resource blocks according to at least one of:

a virtual resource-block bundle $N_{\text{bundle}}$ - 1 being mapped to a physical resource-block bundle $N_{\text{bundle}}$ - 1; or
a virtual resource-block bundle $j \in \{0,1,...,N_{\text{bundle}} - 2\}$ being mapped to a physical resource-block bundle f(j),

where f(j) = rC + c, j = cR + r, r = 0,1, ..., R - 1, c = 0,1,..., C - 1, R = 2, and $C = \lfloor N_{bundle} / R \rfloor$.

11. The method of claim 10, wherein R indicates that two resource-block bundles are taken as a unit, C indicates a number of units corresponding to $N_{bundle}$ resource-block bundles when two resource-block bundles are taken as a unit, c indicates one of C units, and r indicates one resource-block bundle in one unit.

12. The method of claim 1, further comprising:
mapping the first number of virtual resource blocks corresponding to the MBS data to the second number of physical resource blocks according to a non-interleaved mapping scheme if the indication information is not received.

13. A communication method, comprising:
transmitting indication information, wherein the indication information indicates a mapping scheme from virtual resource blocks corresponding to multicast broadcast service (MBS) data broadcasted to physical resource blocks.

14. The method of claim 13, wherein the MBS data is a physical downlink shared channel (PDSCH) scheduled with a downlink control information (DCI) format 4_0.

15. The method of claim 13 or 14, wherein the mapping scheme indicated by the indication information is non-interleaved mapping;

    a virtual resource block n is mapped to a physical resource blocks n; or

    the virtual resource block n is mapped to a physical resource block $n + N_{\text{start}}^{\text{CORESET}}$ ,

    wherein $N_{\text{start}}^{\text{CORESET}}$ is a lowest-numbered physical resource block in a control resource set where a corresponding DCI is received.

16. The method of any of claims 13 to 15, wherein the mapping scheme indicated by the indication information is interleaved mapping.

17. The method of claim 16, wherein a set of $N_{\text{MBS,init}}^{\text{size}}$ virtual resource blocks $\{0,1,\dots,N_{\text{MBS,init}}^{\text{size}} - 1\}$ are divided into $N_{bundle}$ virtual resource-block bundles in increasing order of a virtual resource-block number and a virtual bundle number, wherein

    $N_{\text{MBS,init}}^{\text{size}}$ is a size of a control resource set (CORESET) 0 if the CORESET 0 is configured for a cell; and

    $N_{\text{MBS,init}}^{\text{size}}$ is a size of an initial downlink bandwidth part if the CORESET 0 is not configured for a cell.

18. The method of claim 17, wherein a set of $N_{\text{MBS,init}}^{\text{size}}$ physical resource blocks $\{N_{\text{start}}^{\text{CORESET}}, N_{\text{start}}^{\text{CORESET}} + 1, \dots, N_{\text{start}}^{\text{CORESET}} + N_{\text{MBS,init}}^{\text{size}} - 1\}$ are divided into $N_{bundle}$ physical resource-block bundles in increasing order of a physical resource-block number and a physical bundle number, where

    $N_{\text{bundle}} = \lceil (N_{\text{MBS,init}}^{\text{size}} + (N_{\text{MBS},i}^{\text{start}} + N_{\text{start}}^{\text{CORESET}})\mathrm{mod}L)/L \rceil$ L = 2 is a bundle size, and $N_{\text{start}}^{\text{CORESET}}$ is a lowest-numbered physical resource block in a control resource set where a corresponding DCI is transmitted.

19. The method of claim 18, wherein a virtual resource-block bundle 0 and/or a physical resource-block bundle 0 comprises $L - ((N_{\text{MBS},i}^{\text{start}} + N_{\text{start}}^{\text{CORESET}})\mathrm{mod}\ L)$ virtual resource blocks and/or physical resource blocks;

    a virtual resource-block bundle $N_{bundle}$ - 1 and/or a physical resource-block bundle $N_{bundle}$ - 1 comprises $(N_{\text{BWP,init}}^{\text{size}} + N_{\text{BWP},i}^{\text{start}} + N_{\text{start}}^{\text{CORESET}})\mathrm{mod}\ L$ virtual resource blocks and/or physical resource blocks if

$$\left(N_{\text{MBS,init}}^{\text{size}} + N_{\text{MBS},i}^{\text{start}} + N_{\text{start}}^{\text{CORESET}}\right) \bmod L > 0$$

, otherwise, the virtual resource-block bundle $N_{\text{bundle}}$ - 1 and/or the physical resource-block bundle $N_{\text{bundle}}$ - 1 comprises L virtual resource blocks and/or physical resource blocks; and

all other virtual resource-block bundles and/or physical resource-block bundles comprise L virtual resource blocks and/or physical resource blocks.

20. The method of claim 16, wherein $N_{\text{MBS},i}^{\text{size}}$ resource blocks in an MBS common frequency resource (CFR) i with a starting position $N_{\text{MBS},i}^{\text{start}}$ are divided into $N_{\text{bundle}} = \left\lceil \left(N_{\text{MBS},i}^{\text{size}} + \left(N_{\text{MBS},i}^{\text{start}} \bmod L_i\right)\right)/L_i \right\rceil$ resource-block bundles in increasing order of a resource-block number and a resource-block bundle number, where $L_i$ = 2.

21. The method of claim 20, wherein a resource-block bundle 0 comprises $L_i$ - $\left(N_{MBS,i}^{start} \bmod L_i\right)$ resource blocks;

a resource-block bundle $N_{\text{bundle}}$ - 1 comprises $\left(N_{MBS,i}^{start} + N_{MBS,i}^{size}\right) \bmod L_i$ resource blocks if $\left(N_{MBS,i}^{start} + N_{MBS,i}^{size}\right) \bmod L_i > 0$, otherwise, the resource-block bundle $N_{\text{bundle}}$ - 1 comprises $L_i$ resource blocks; and

all other resource-block bundles comprise $L_i$ resource blocks.

22. The method of any of claims 13 to 21, wherein the virtual resource blocks are mapped to the physical resource blocks according to at least one of:

a virtual resource-block bundle $N_{\text{bundle}}$ - 1 being mapped to a physical resource-block bundle $N_{\text{bundle}}$ - 1; or
a virtual resource-block bundle $j \in \{0,1,..., N_{\text{bundle}} - 2\}$ being mapped to a physical resource-block bundle f(j),

where *f(j)* = *rC* + *c*, *j* = *cR* + r, r = 0,1, ..., *R* - 1, c = 0,1, ..., *C* - 1, *R* = 2, $C = \lfloor N_{bundle}/R \rfloor$.

23. The method of claim 22, wherein R indicates that two resource-block bundles are taken as a unit, C indicates a number of units corresponding to $N_{\text{bundle}}$ resource-block bundles when two resource-block bundles are taken as a unit, c indicates one of C units, and r indicates one resource-block bundle in one unit.

24. A communication apparatus, comprising a unit configured to perform the method of any of claims 1 to 23.

25. A communication apparatus, comprising a processor and an interface circuit, wherein the interface circuit is configured to receive a signal from another communication apparatus other than the communication apparatus and transmit the signal to the processor, or transmit a signal from the processor to another communication apparatus other than the communication apparatus, and the processor is configured to perform the method of any of claims 1 to 23 through a logic circuit or executing code instructions.

26. A chip, applied to a terminal and configured to perform the method of any of claims 1 to 23.

27. A chip module, applied to a terminal and comprising a transceiving component and a chip, wherein the chip is configured to perform the method of any of claims 1 to 23.

28. A computer-readable storage medium storing a computer program or instruction operable with a communication apparatus to perform the method of any of claims 1 to 23.

FIG. 1A

FIG. 1B

EP 4 535 702 A1

FIG. 2

TERMINAL DEVICE

NETWORK DEVICE

S301. INDICATION INFORMATION (INDICATING A MAPPING SCHEME FROM VIRTUAL RESOURCE BLOCKS CORRESPONDING TO BROADCAST MBS DATA TO PHYSICAL RESOURCE BLOCKS)

S302. MAP A FIRST NUMBER OF VIRTUAL RESOURCE BLOCKS CORRESPONDING TO THE MBS DATA TO A SECOND NUMBER OF PHYSICAL RESOURCE BLOCKS ACCORDING TO THE MAPPING SCHEME INDICATED BY THE INDICATION INFORMATION

FIG. 3

400

COMMUNICATION APPARATUS

TRANSCEIVING UNIT — 41

PROCESSING UNIT — 42

FIG. 4

500

COMMUNICATION
APPARATUS

51

TRANSCEIVING
UNIT

52

PROCESSING
UNIT

## FIG. 5

ANTENNA

61

RF CIRCUIT

62

MEMORY ⟷ PROCESSOR

I/O APPARATUS

## FIG. 6

ANTENNA

RF UNIT

71

MEMORY — PROCESSOR

72

FIG. 7

**INTERNATIONAL SEARCH REPORT**

| International application No. |
| --- |
| **PCT/CN2023/097718** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC： H04L

Documentation searched other than minimum documentation to the extent that such documents are included in the fields searched

Electronic data base consulted during the international search (name of data base and, where practicable, search terms used)

CNTXT, ENTXT, DWPI: 多播, 广播, 组播, 虚拟资源块, 物理资源块, 映射, 指示, 配置, multicast, broadcast, groupcast, virtual resource block, VRB, physical resrouce block, PRB, mapping, indication, configuration

### C. DOCUMENTS CONSIDERED TO BE RELEVANT

| Category* | Citation of document, with indication, where appropriate, of the relevant passages | Relevant to claim No. |
| --- | --- | --- |
| X | CN 113453164 A (CHENDU TD TECH LTD.) 28 September 2021 (2021-09-28) description, paragraphs 0002-0289, and figures 1-9 | 1-28 |
| A | CN 114071766 A (VIVO COMMUNICATION TECHNOLOGY CO., LTD.) 18 February 2022 (2022-02-18) entire document | 1-28 |
| A | US 2022046588 A1 (SAMSUNG ELECTRONICS CO., LTD.) 10 February 2022 (2022-02-10) entire document | 1-28 |
| A | US 2020195372 A1 (QUALCOMM INCORPORATED) 18 June 2020 (2020-06-18) entire document | 1-28 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 July 2023** | **20 July 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 113453164 | A | 28 September 2021 | None | | | |
| CN | 114071766 | A | 18 February 2022 | WO | 2022028464 | A1 | 10 February 2022 |
| US | 2022046588 | A1 | 10 February 2022 | WO | 2022031085 | A1 | 10 February 2022 |
| | | | | KR | 20220018881 | A | 15 February 2022 |
| US | 2020195372 | A1 | 18 June 2020 | US | 2022271860 | A1 | 25 August 2022 |
| | | | | WO | 2020123844 | A1 | 18 June 2020 |
| | | | | EP | 3895359 | A1 | 20 October 2021 |
| | | | | CN | 113169849 | A | 23 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210622061